# EUROPEAN PATENT APPLICATION

(11) **EP 4 530 833 A1**
(43) Date of publication of application: **02.04.2025**
(21) Application number: 24194319.0
(22) Date of filing: 13.08.2024
(51) Int. Cl.: G06F 8/77, G06F 11/3604, G06F 9/451, G06F 8/33

(54) **METHODS AND SYSTEMS FOR ADDING TARGETED MESSAGES**

(30) Priority: 29.09.2023 US 202318478324
(71) Applicant: Schneider Electric Systems USA, Inc., Foxborough, MA 02035 (US)
(72) Inventor: REDMOND, James, Richmond, ON KOA2Z0 (CA); COLQUHOUN, Pamela, Dunrobin, ON KOA1TO (CA)
(74) Representative: Friese Goeden Patentanwälte PartGmbB

(57) **Abstract**

A method (400) for presenting a targeted message includes establishing (410) communications with a user computer to obtain, from the user computer, information on an application running on the user computer, analyzing (420) the information on the application to identify an opportunity to present a message to the user computer, selecting (430) one or more targeted messages in response to identifying the opportunity to present the message, and providing (440) the one or more targeted messages to the user computer for presentation at the user computer.

## Description

### CLAIM OF PRIORITY

Under the applicable patent laws and/or rules pursuant to the Paris Convention, this application is made to timely claim priority to and benefit of prior-filed US patent application Ser. No. 18/478,324, filed 29 September 2023 and entitled "Methods and Systems for Adding Targeted Messages", which is hereby incorporated by reference in its entirety as permitted by applicable law.

### FIELD

Aspects of the present disclosure relate to targeted messages and, more particularly, to adding targeted messages to software development solutions. The present disclosure also encompasses applying this same approach to product and other technical documentation.

### BACKGROUND

Nowadays, more and more organizations utilize various software platforms to improve internal processes and/or customer experiences. For example, a Supervisory Control and Data Acquisition (SCADA) system may be used to collect and analyze data for providing remote-control functionality for high-level processes across a large geographic area. Some known software platforms allow organizations to customize the platform by modifying and/or augmenting the default codebase. However, such customization can be cumbersome, costly, and/or time consuming.

### SUMMARY

The present disclosure enables organizations to manage, operate, and/or customize a software platform efficiently and reliably. In one aspect, a method is provided for presenting a targeted message. The method includes establishing communications with a user computer to obtain, from the user computer, information on an application running on the user computer, analyzing the information on the application to identify an opportunity to present a message to the user computer, selecting one or more targeted messages in response to identifying the opportunity to present the message, and providing the one or more targeted messages to the user computer for presentation at the user computer.

In another aspect, a method is provided for presenting a targeted message. The method includes establishing communications with a user interface to obtain one or more representations of input received and output provided at the user interface, analyzing the one or more representations to identify one or more code elements, analyzing the one or more code elements to identify one or more code quality issues associated with the one or more code elements, selecting one or more targeted messages in response to identifying the one or more code quality issues based at least in part on the one or more code quality issues, and providing the one or more targeted messages to the user interface.

In yet another aspect, a system is provided. The system includes a processor and a computer-readable memory comprising one or more instructions for causing the processor to establish communications with a user interface to obtain, from the user interface, one or more representations of input received and output provided at the user interface, analyze the one or more representations to identify one or more code elements, analyze the one or more code elements to identify one or more code quality issues associated with the one or more code elements, select one or more targeted messages in response to identifying the one or more code quality issues based at least in part on the one or more code quality issues, and provide the one or more targeted messages to the user interface.

Other aspects and features of the present disclosure will be in part apparent and in part pointed out herein. This Summary is provided to introduce a selection of concepts in a simplified form that are further described below in the Detailed Description. This Summary is not intended to identify key features or essential features of the claimed subject matter, nor is it intended to be used in isolation as an aid in determining the scope of the claimed subject matter.

### BRIEF DESCRIPTION OF THE DRAWINGS

Aspects of the present disclosure are described in detail below with reference to the attached drawing figures, wherein:
FIG. 1 is a block diagram illustrating an example environment;
FIG. 2 is a block diagram illustrating an example system for presenting one or more targeted messages in an environment, such as the environment illustrated in FIG. 1;
FIG. 3 is a block diagram illustrating an example messaging engine that may be utilized in the environment illustrated in FIG. 1 and/or the system illustrated in FIG. 2;
FIG. 4 is a flow chart illustrating an example method for presenting one or more targeted messages using the system shown in FIG. 2 and/or the messaging engine shown in FIG. 3;
FIG. 5 is a flowchart illustrating another example method for presenting one or more targeted messages using the system shown in FIG. 2 and/or the messaging engine shown in FIG. 3; and
FIG. 6 is a computer architecture diagram illustrating an computing system that may be used to perform one or more computing operations in the environment illustrated in FIG. 1, the system illustrated in FIG. 2, and/or the messaging engine illustrated in FIG. 3.

Corresponding reference numbers indicate corresponding parts throughout the drawings.

### DETAILED DESCRIPTION

According to various examples of the present disclosure, one or more targeted messages are added to software development solutions to facilitate promoting code quality and/or mitigate the risk of defects in software development. Additionally or alternatively, the aspects and features of the present disclosure can be applied to other documents or textual content (e.g., technical documents, user manuals, engineering reports, medical and scientific writing, research papers, scholarly articles, marketing material) to facilitate maintaining consistency, clarity, and/or precision. The systems and methods described herein may be used to determine a context and deliver useful information. For example, targeted messages may be generated and/or selected based on current conditions, code elements, usage information, and/or profile information. In some examples, the presentation of one or more targeted messages may be initiated and/or implemented in response to one or more triggering events or conditions. In this manner, useful information may be delivered or presented in real-time (or near-real-time), thereby enabling well-informed decisions to be made on a timely basis.

Aspects of the present disclosure provide for a computing system that performs one or more operations in an environment including a plurality of devices coupled to each other via a network (e.g., a local area network (LAN), a wide area network (WAN), the internet). The systems and methods described herein may be implemented using computer programming or engineering techniques including computer software, firmware, hardware, or a combination or subset thereof. Unless defined otherwise, all technical and scientific terms used herein have the same meaning as commonly understood by one of ordinary skill in the art to which the present disclosure belongs. Although any methods and materials similar to or equivalent to those described herein can be used in the practice or testing of the present disclosure, some preferred methods and materials are described below.

As used herein, the term "codebase" refers to a collection of source code used to build a software system, application, or software component, and the term "code element" refers to an element or component of a codebase. A codebase may be hierarchical in structure and include a plurality of code elements with respective sub-ordinate code elements. For example, a common business-oriented language ("COBOL") codebase may include the following hierarchical levels in descending order, i.e., from most general to most specific: (1) program, (2) division, (3) section, (4) paragraph, (5) sentence, and (6) statement.

As used herein, the term "quality profile" refers to a set of rules, conditions, and/or metrics used to review or evaluate a codebase and/or code element, and the term "code quality issue" refers to an indication that a given codebase and/or code element has failed to meet or satisfy a quality profile or at least a part of a quality profile.

Customizing a codebase can be cumbersome, costly, and/or time consuming. Moreover, given the scope and size of at least some codebases, it is difficult or impossible for human developers to truly review or evaluate codebases or changes to codebases. The implications of these challenges are that codebases are at high risk of being poorly developed, tested, and/or maintained and, thus, are likely to include one or more code quality issues. Furthermore, systems incorporating or using such codebases are at risk of run-time errors, faults, system downtime, and even obsolescence.

The systems and methods disclosed herein provide a technological solution to such technical problems by adding targeted messages. For example, targeted messages may be used to facilitate codebase development, maintenance, quality assurance, and/or security risk mitigation. In some examples, targeted messages may be used to inform a user of an application status and/or prompt the user to take an action. Additionally, at least some targeted messages may be consumed by the application itself and be used to notify the application of a state change and/or control application behavior. In this manner, aspects of the present disclosure may facilitate management, operation, and/or customization of one or more software platforms.

The technical effect of the systems and methods described herein is achieved by using a computing system configured to perform one or more of the following operations: (i) establishing communications with a user computer to obtain information on an application running on the user computer; (ii) establishing communications with a user interface to obtain representations of input received and output provided at the user interface; (iii) analyzing information on an application to identify an opportunity to present a message to a user computer; (iv) analyzing representations of input received and output provided at a user interface to identify or detect code elements; (v) analyzing code elements to identify code quality issues associated with the code elements; (vi) determining whether code elements are compliant with a style guide; (vii) generating or recording usage information associated with an application and/or user computer; (viii) obtaining profile information associated with a user associated with a user computer and/or user interface; (ix) selecting targeted messages; (x) providing targeted messages to a user computer and/or user interface.

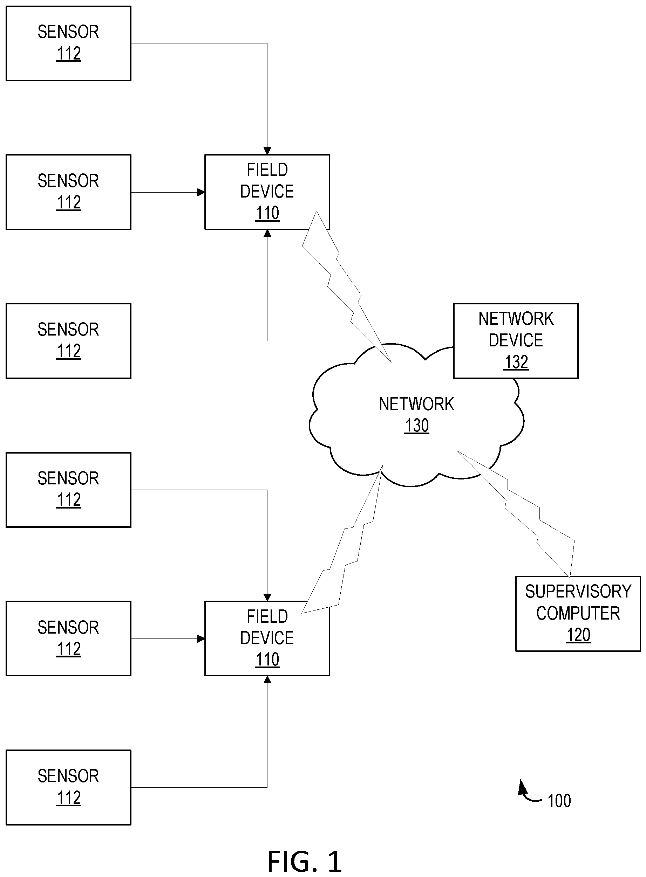

FIG. 1 shows an example environment 100 including a plurality of field devices 110. Each field device 110 may be and/or include a remote terminal unit (RTU) and/or programmable logic controller (PLC) configured to receive or collect sensor information from one or more sensors 112. In some examples, the field devices 110 are spread out across a widely-dispersed infrastructure to facilitate monitoring and/or controlling one or more industrial processes.

As shown in FIG. 1, the environment 100 may include one or more supervisory computers 120 for monitoring and/or controlling the field devices 110 and/or sensors 112. For example, the supervisory computer 120 may receive or collect the sensor information from the field devices 110 and analyze the sensor information to facilitate monitoring and/or controlling one or more industrial processes. In some examples, the supervisory computer 120 is configured to automatically operate and/or reconfigure one or more field devices 110 based on the sensor information.

The supervisory computer 120 is communicatively coupled to the field devices 110 via a network 130. In some examples, the network 130 is an Industrial Control System (ICS) network that connects the supervisory computer 120 to the field devices 110 for automation and process control applications. As shown in FIG. 1, the network 130 may include one or more network devices 132, such as a firewall, unidirectional gateway, and/or data diode, to facilitate protecting the field devices 110 and/or supervisory computer 120 from external threats.

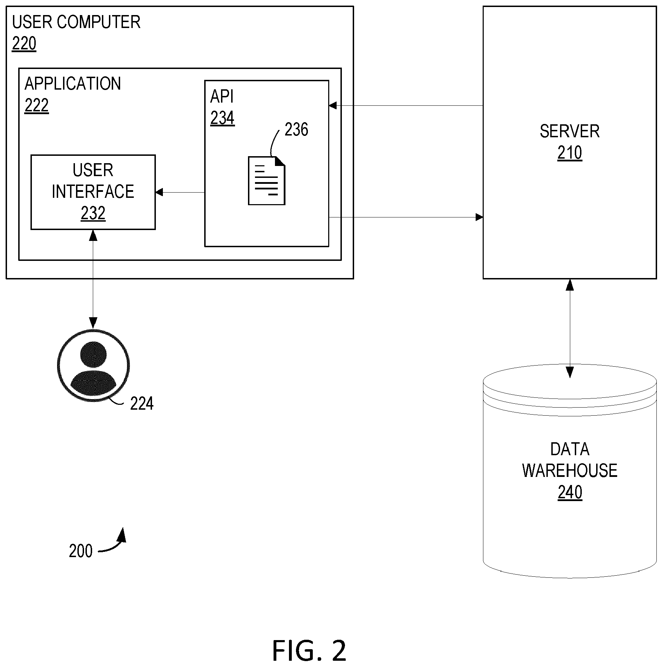

FIG. 2 shows an example system 200 that may be used to monitor and/or control one or more devices (e.g., field devices 110). The system 200 may include one or more servers 210 and one or more user computers 220 coupled to the servers 210. In some examples, the system 200 is a distributed computing environment in which the servers 210 and user computers 220 may operate on, in communication with, or as part of a network (e.g., network 130). For example, a functionality of the server 210 may be provided by the user computers 220 which perform one or more operations as part of, or in communication with, the network. In some examples, the server 210 may host one or more services, applications, portals, and/or other resources for performing one or more operations and/or providing other functionality described herein.

As shown in FIG. 2, the system 200 may include one or more applications 222 configured to perform a plurality of operations. For example, the applications 222 may be used to monitor and/or control one or more industrial processes in the environment 100 (shown in FIG. 1). While one application 222 is shown in FIG. 2 as running on the user computer 220, one of ordinary skill in the art would understand that any number of applications 222 may operate or run on any combination of computing devices that enables the system 200 to function as described herein.

In some examples, a user 224 of a user computer 220 may customize the system 200, server 210, user computer 220, and/or application 222 by designing and/or developing a codebase. One or more code elements of the codebase may be designed and/or developed, for example, to improve or reconfigure one or more industrial processes and/or otherwise allow for improved management of one or more devices. To facilitate codebase development, maintenance, quality assurance, and/or security risk mitigation, the application 222 may include or use a user interface 232 configured to receive input from and/or provide output to the user 224 and an application programming interface (API) 234 configured to receive input from and/or provide output to the user interface 232 and/or one or more other software systems, applications, or software components. In some examples, the API 234 communicates with the user interface 232 and one or more other software systems, applications, or software components to facilitate identifying an opportunity to present a message and generating and/or selecting one or more targeted messages 236 for presentation. For example, the API 234 may be used to monitor a current state or condition of the user computer 220, application 222, and/or user interface 232 for a triggering event or condition and present one or more targeted messages 236 upon detection of the triggering event or condition. In this manner, the system 200 may be used to present useful information in real-time (or near-real-time), thereby enabling the user computer 220, application 222, and/or user 224 to make well-informed decisions on a timely basis.

As shown in FIG. 2, the server 210 and/or user computer 220 may be coupled to a data warehouse 240 configured to store data associated with the server 210, user computer 220, application 222, user 224, user interface 232, and/or API 234. For example, the user interface 232 and/or API 234 may accumulate time-stamped data and events in the data warehouse 240. In some examples, a functionality of the data warehouse 240 is provided by the server 210 and/or user computer 220 which perform one or more operations as part of, or in communication with, the network. For example, the data warehouse 240 may host or store data structures and/or algorithms used by the application 222, user interface 232, and/or API 234. In some examples, data warehouse 240 may host or store configuration data that enables the server 210 and/or user computer 220 to add one or more targeted messages to software development solutions and/or monitor, operate, and/or reconfigure one or more field devices 110 (shown in FIG. 1). Additionally or alternatively, data warehouse 240 may host or store any other type of data that enables the system 200 to function as described herein.

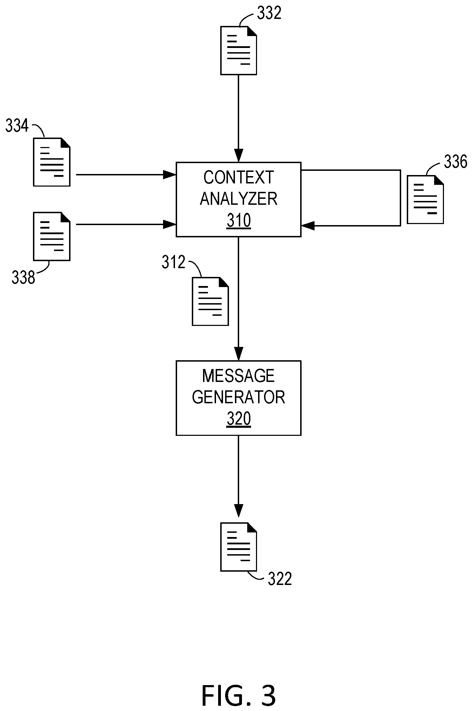

FIG. 3 shows an example messaging engine 300 that may be used to promote code quality and/or mitigate the risk of defects in software development. The messaging engine 300 may also be applied to other documents or textual content, such as a document being developed as a manual to describe the operation of a solution to a customer (e.g. a manual or marketing material) or to internal documentation used for the development and support of the solution.

In some examples, the messaging engine 300 includes a context analyzer 310 configured to determine context 312 and a message generator 320 configured to determine content 322 (e.g., targeted message 236). The messaging engine 300 may be used in a computing system (e.g., system 200), for example, to determine context 312 for identifying an opportunity to present a message and/or to determine content 322 for presenting a targeted message (e.g., targeted message 236) to a user (e.g., user 224) and/or system (e.g., user computer 220, application 222). Alternatively, the messaging engine 300 may be used for any other purpose that allows or enables the messaging engine 300 to function as described herein.

The context analyzer 310 may determine the context 312, for example, by receiving or obtaining information 332 from the user computer 220, application 222, and/or user interface 232 and analyzing the information 332 to determine a current state or condition of the user computer 220, application 222, and/or user interface 232. In some examples, the information 332 includes one or more representations of input received and/or output provided at the user interface 232 (shown in FIG. 2).

To facilitate determining the current state or condition, the context analyzer 310 may process the information 332 into a plurality of components (e.g., text, shapes, edges) from which meaningful information may be extracted. In this manner, the text may be monitored to identify an opportunity to present a message to the client pertaining to the quality, tone, and/or style of the document or textual content.

Where the current state or condition includes or is indicative of a codebase, or at least one code element of the codebase, the context analyzer 310 may analyze one or more code elements to identify or detect a code quality issue, such as a code bug, a code vulnerability, and/or a code smell. A code bug may refer to a defect or poor coding practice that may cause or create a code reliability or performance issue. A code vulnerability may refer to a defect or poor coding practice that may allow an application (e.g., application 222) or data to be improperly accessed or exploited by a third party. A code smell may refer to a quality or characteristic in the code element that is indicative of a poor software development practice which may impede development and/or increase the likelihood of code bugs or code vulnerabilities in the future.

In some examples, the context analyzer 310 may identify or detect a code quality issue by comparing the codebase and/or code element with a style guide 334 defining one or more quality profiles. The context analyzer 310 may identify or detect a code quality issue, for example, when the context analyzer 310 determines that at least one code element is not compliant with the style guide 334. The style guide 334 may include one or more programming standards, conventions, and/or best practices that enable the codebase to be easily or efficiently reviewed, analyzed, and/or maintained. In this manner, the style guide 334 may be used to ensure consistent design and/or promote informed design decisions. In other examples, the context analyzer 310 may identify or detect a text quality issue by comparing the document and/or textual content with a style guide 334 including one or more writing standards, conventions, and/or best practices that enable the document to be easily or efficiently reviewed, analyzed, and/or maintained.

In some examples, the context analyzer 310 may also consider a severity of a code quality issue when determining the context 312. The severity of a code quality issue may be indicated by the following levels: minor, major, critical, and blocker. A minor code quality issue is likely to cause or create adverse impact when the codebase is in production and/or use. A major code quality issue is highly likely to cause or create adverse impact when the codebase is in production and/or use. A critical code quality issue is likely to cause or create significant adverse impact when the codebase is in production and/or use. A blocker code quality issue is highly likely to cause or create significant adverse impact when the codebase is in production and/or use.

In some examples, the context analyzer 310 may collect or record the context 312 and/or information 332 to generate or determine usage information 336 which may be used to determine a current context 312. For example, the context analyzer 310 may be configured to analyze the recorded context 312 and/or information 332 to determine usage information 336 which is indicative of one or more patterns or trends in the recorded context 312 and/or information 332. In this manner, historical data (e.g., recorded context 312 and/or information 332) may be efficiently used to facilitate determining a current context 312. In some examples, the usage information 336 is indicative of a propensity to engage in or exhibit a behavior (e.g., create a code quality issue). Additionally or alternatively, the context analyzer 310 may determine the current context 312 based at least in part on profile information 338, such as user roles, user permissions, and user preferences.

In some examples, the message generator 320 receives or obtains the context 312 from the context analyzer 310 and analyzes the context 312 to determine the content 322 based on the context 312. The content 322 may be determined, for example, to be relevant and/or useful based on a current state or condition of the user computer 220, application 222, and/or user interface 232, as well as usage information 336 and/or profile information 338.

In some examples, the message generator 320 may provide or transmit the content 322 to the user computer 220, application 222, and/or user interface 232 for presentation at the user interface 232. Such content 322 may facilitate promoting code quality and/or mitigating a likelihood or impact of a code quality issue by informing the user 224 of an application status and/or by prompting the user 224 to take an action (e.g., resolve a code quality issue) based on the content 322. Additionally or alternatively, the message generator 320 may provide or transmit the content 322 to the user computer 220, application 222, and/or user interface 232 for consumption by the user computer 220, application 222, and/or user interface 232. Such content 322 may promote code quality and/or mitigate a likelihood or impact of a code quality issue by automatically controlling an application behavior or taking an action (e.g., resolving a code quality issue) based on the content 322.

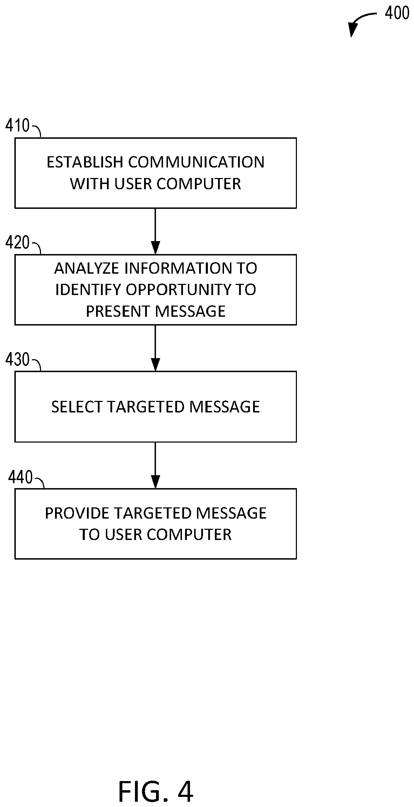

FIG. 4 shows an example method 400 for presenting one or more targeted messages 236 (shown in FIG. 2). The method 400 may be implemented, for example, by a server (e.g., server 210) in a client/server system in which the server performs one or more operations for a client (e.g., user computer 220). In some examples, the server establishes communications with the client at operation 410 to obtain, from the client, information on a software development solution running on the client (e.g., information 332).

The server may analyze the information obtained from the client at operation 420 to identify an opportunity to present a message to the client. For example, a user interface of a software development solution running on the client (e.g., user interface 232) may be analyzed to detect or identify one or more code elements, and the code elements may be analyzed to detect or identify one or more code quality issues associated with the code elements. In this manner, the opportunity to present a message to the client may be identified based at least in part on the code quality issues. In some examples, the server may identify the opportunity to present a message to the client when the code elements are not compliant with a style guide 334 (shown in FIG. 3).

In some examples, the server may collect or record historical data associated with the software development solution, client, and/or a user of the client (e.g., user 224) and analyze the historical data to generate or determine usage information 336 (shown in FIG. 3) which may be used to identify the opportunity to present a message based at least in part on the usage information 336. Additionally or alternatively, the server may obtain profile information associated with the user (e.g., profile information 338) and analyze the profile information to identify the opportunity to present a message based at least in part on the profile information.

In response to identifying the opportunity to present the message, the server may generate and/or select one or more targeted messages (e.g., targeted message 236, content 322) at operation 430. The targeted messages may be generated and/or selected, for example, based on a current state or condition of the user interface, software development solution, and/or client. In some examples, the server may generate and/or select the targeted messages when the code elements are not compliant with a style guide 334 (shown in FIG. 3) and/or are otherwise determined to include one or more code quality issues. Additionally or alternatively, the server may generate and/or select the targeted messages based at least in part on usage information 336 and/or profile information 338.

The server may provide the targeted messages to the client at operation 440. In some examples, the server provides the targeted messages for presentation to the user at the user interface. Such targeted messages may include instructions on how to remediate a code quality issue. Additionally or alternatively, the server may provide the targeted messages for consumption by the client, software development solution, and/or user interface to enable the client, software development solution, and/or user interface to automatically perform one or more operations.

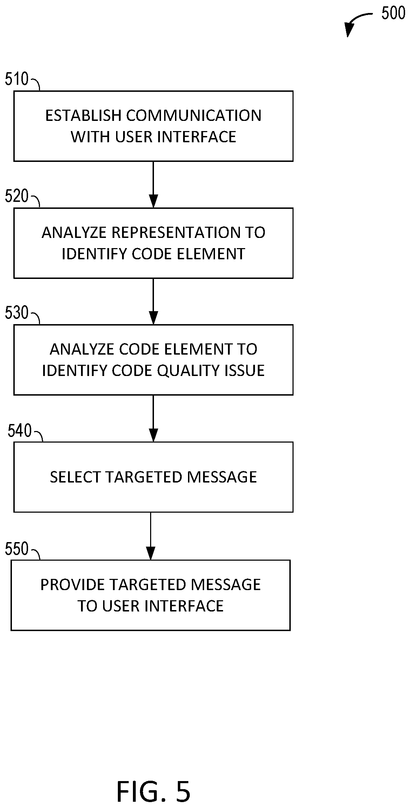

FIG. 5 shows another example method 500 for presenting one or more targeted messages 236 (shown in FIG. 2). The method 500 may be implemented, for example, by an application programming interface (e.g., API 234) of a user computer (e.g., user computer 220) and/or an application running on the user computer (e.g., application 222). In some examples, the API is used to establish communications with a user interface (e.g., user interface 232) at operation 510 to obtain, from the user interface, one or more representations of input received and/or output provided at the user interface (e.g., information 332).

The API is used to analyze the representations obtained from the user interface to detect or identify one or mode code elements at operation 520 and analyze the code elements to detect or identify one or more code quality issues associated with the code elements at operation 530. In some examples, the API may be used to identify the code quality issues when the code elements are not compliant with a style guide 334 (shown in FIG. 3).

In some examples, the API may be used to collect or record historical data associated with the application, user computer, and/or a user of the user computer (e.g., user 224) and analyze the historical data to generate or determine usage information 336 (shown in FIG. 3) which may be used to identify the code quality issues based at least in part on the usage information 336. Additionally or alternatively, the API may be used to obtain profile information associated with the user (e.g., profile information 338) and analyze the profile information to identify the code quality issues based at least in part on the profile information.

In response to identifying the code quality issues, the API may be used to generate and/or select one or more targeted messages (e.g., targeted message 236, content 322) at operation 540. The targeted messages may be generated and/or selected, for example, based at least in part on the code quality issues. In some examples, the API may be used to generate and/or select the targeted messages when one or more code elements are not compliant with a style guide 334 (shown in FIG. 3) and/or are otherwise determined to include one or more code quality issues. Additionally or alternatively, the API may be used to generate and/or select the targeted messages based at least in part on usage information 336 and/or profile information 338.

The API may be used to provide the targeted messages to the user interface at operation 550 for presentation to the user. Such targeted messages may include instructions on how to remediate a code quality issue. Additionally or alternatively, the API may be used to provide the targeted messages for consumption by the user computer, application, and/or user interface to enable the user computer, application, and/or user interface to automatically perform one or more operations.

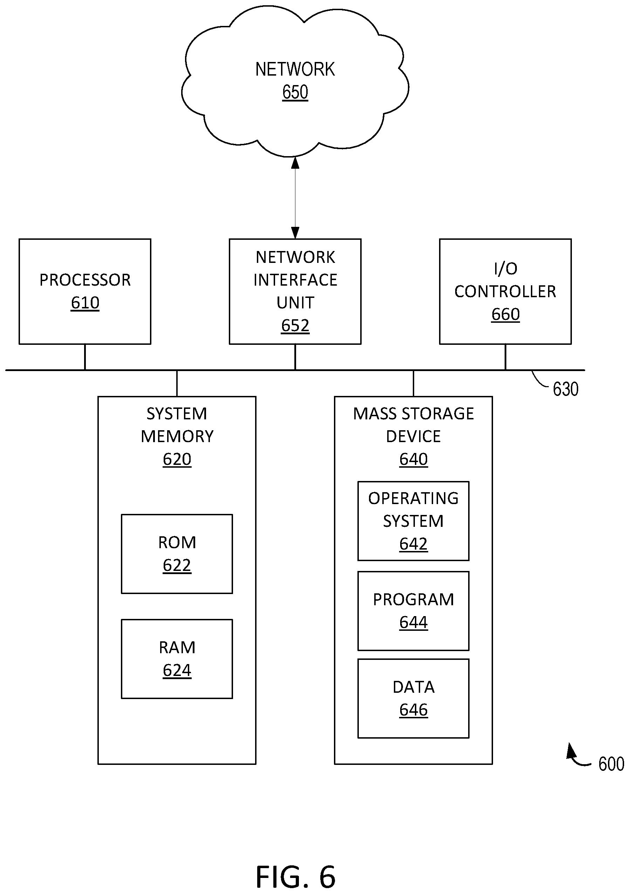

FIG. 6 shows an example computing system 600 (e.g., supervisory computer 120, server 210, user computer 220, messaging engine 300) configured to perform one or more computing operations described herein. In some examples, the computing system 600 includes a processor 610, a system memory 620, and a bus 630 coupling various system components including the system memory 620 to the processor 610.

The processor 610 is configured to perform general computing functions and process data and instructions to perform one or more operations and/or provide other functionality described herein. For example, the processor 610 may access the system memory 620 to read data and instructions from and/or write data and instructions to the system memory 620 for use in executing one or more computer-executable instructions. In this manner, the processor 610 may be programmed to execute any aspect of the software components described herein, including software components for implementing the application 222 (shown in FIG. 2), user interface 232 (shown in FIG. 2), API 234 (shown in FIG. 2), context analyzer 310 (shown in FIG. 3), and/or message generator 320 (shown in FIG. 3). In some examples, the processor 610 may be or include any quantity of processing units including a central processing unit, a graphics processing unit, a field-programmable gate array (FPGA), a digital signal processor (DSP), or other hardware logic components including, without limitation, an Application-Specific Integrated Circuit (ASIC), Application-Specific Standard Product (ASSP), System-on-a-Chip System (SOC), Complex Programmable Logic Device (CPLD), etc.

The system memory 620 includes any combination of computer-readable media that may be accessed by the processor 610. In some examples, the system memory 620 includes a read-only memory (ROM) 632 which stores instructions for executing basic functions and a random access memory (RAM) 634 which temporarily stores data and instructions for actively used programs. For example, the RAM 634 may be used to host or store targeted message 236 (shown in FIG. 2), context 312 (shown in FIG. 3), content 322 (shown in FIG. 3), information 332 (shown in FIG. 3), style guide 334 (shown in FIG. 3), usage information 336 (shown in FIG. 3), and/or profile information 338 (shown in FIG. 3), as well as one or more software components for implementing the application 222 (shown in FIG. 2), user interface 232 (shown in FIG. 2), API 234 (shown in FIG. 2), context analyzer 310 (shown in FIG. 3), and/or message generator 320 (shown in FIG. 3).

Computer-readable media includes both communication media and computer storage media. Communication media typically embody computer-readable instructions, data structures, program modules, or other data in a modulated data signal, such as a carrier wave or other transport mechanism. The term "modulated data signal" means a signal that has one or more of its characteristics set or changed in a manner as to encode information in the signal. By way of example, and not limitation, communication media includes wired media, such as a wired network or direct-wired connection, and wireless media, such as acoustic, radio frequency, and infrared media.

In contrast, computer storage media include tangible forms of media that can store information such as computer-readable instructions, data structures, program modules, or other data. By way of example, and not limitation, computer storage media includes ROM 632, RAM 634, hard disk drives (HDDs), solid-state drives (SSDs), external hard drives, flash drives, optical storage media (e.g., compact discs (CDs), digital versatile discs (DVDs), and magnetic storage media (e.g., tape drives). For purposes of the present disclosure, computer storage media is mutually exclusive to communication media and excludes waves, signals, and other transitory or intangible forms of media.

It should be appreciated that the software components described herein, when loaded into the processor 610 and executed, may transform the processor 610 and the overall computing system 600 from a general-purpose computing system into a special-purpose computing system customized to facilitate the functionality described herein. More specifically, the computer-executable instructions contained within the software components described herein transform the processor 610 to operate or function as a finite-state machine by specifying how the processor 610 transitions between states, thereby transforming the transistors or other discrete circuit elements constituting the processor 610.

Encoding the software components described herein may also transform the physical structure of the computer-readable media described herein. The specific transformation of physical structure may depend on various factors, in different implementations of the present disclosure. Examples of such factors may include, but are not limited to, the technology used to implement the computer-readable media, whether the computer-readable media is characterized as primary or secondary storage, and the like. For example, if the computer-readable media is implemented as semiconductor-based memory, the software disclosed herein may be encoded on the computer-readable media by transforming the physical state of the transistors, capacitors, or other discrete circuit elements constituting the semiconductor-based memory. The software also may transform the physical state of such components in order to store data thereupon.

As another example, the computer-readable media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media, to change the optical characteristics of those locations. Other transformations of physical media are possible without departing from the scope and spirit of the present description, with the foregoing examples provided only to facilitate this discussion.

In some examples, the computing system 600 includes a mass storage device 640 (e.g., data warehouse 240) coupled to the processor 610 for hosting or storing data and instructions, such as an operating system 642, one or more programs 644 (e.g., application 222, user interface 232, API 234, context analyzer 310, message generator 320), and/or data 646 (e.g., targeted message 236, context 312, content 322, information 332, style guide 334, usage information 336, profile information 338). One of ordinary skill in the art would understand that copies of at least some data and/or instructions hosted or stored in the mass storage device 640 may be at least temporarily stored in the system memory 620 to enable the computing system 260 to function as described herein.

As shown in FIG. 6, the computing system 600 may connect to a network 650 (e.g., network 130) through a network interface unit 652 connected to the bus 630. In this manner, the computing system 600 may operate in a networked environment in which the computing system 600 may use one or more remote devices (not shown) to host or store at least some data and/or to execute at least some instructions. Computer communication between computing systems can be a network transfer, a file transfer, an applet transfer, an email, a hypertext transfer protocol (HTTP) transfer, and so on.

In some examples, the computing system 600 may include one or more input/output (I/O) controllers 660 that facilitate communication and data transfer between the processor 610 and one or more I/O devices (not shown) configured to provide input and/or output capabilities. For example, a user (e.g., user 224) may enter commands and information into the computing system 600 using one or more input devices, such as a keyboard, pointing device (e.g., mouse, trackball, touch pad, stylus), microphone, camera, scanner, accelerometer, and the like. Additionally or alternatively, the computing system 600 may present various forms of information, such as text, images, audio, video, alerts, and the like, using one or more output devices, such as a monitor, projector, printer, speaker, actuator, and the like. In some examples, the output device may be integrated with the input device (e.g., in a touchscreen panel or in a controller including a vibrating component).

While some examples are illustrated and described herein with reference to the computing system 600 being, including, or being included in the supervisory computer 120 (shown in FIG. 1), server 210 (shown in FIG. 2), user computer 220 (shown in FIG. 2), and/or messaging engine 300 (shown in FIG. 3), aspects of the present disclosure are operable with any computing system that can execute computer-executable instructions to implement the operations and functionality associated with the computing system 600. It is also contemplated that the computing system 600 may not include all of the components shown in FIG. 6, may include other components that are not explicitly shown in FIG. 6, or may utilize an architecture completely different than that shown in FIG. 6. The computing system 600 should not be interpreted as having any dependency or requirement relating to any one or combination of components shown in FIG. 6. The computing system 600 is only one example of a computing and networking environment for performing one or more computing operations and is not intended to suggest any limitation as to the scope of use or functionality of the present disclosure.

Example methods and systems are described herein for presenting a targeted message. The examples described herein provide useful information in real-time (or near real-time) to facilitate managing, operating, and/or customizing a software platform in an efficient and reliable manner. For example, an API may be used to monitor a current operation and/or status of a user computer and, upon detecting a triggering event or condition, push one or more targeted messages onto a window of an application running on the user computer. When seeing a user review firmware versions installed on devices, the window may display information on the current approved firmware versions as a reminder to see if an upgrade is necessary or desired. In view of the above, it will be seen that several advantages of the aspects of the present disclosure are achieved and other advantageous results attained.

Although described in connection with an example computing system environment, examples of the present disclosure are capable of implementation with numerous other general purpose or special purpose computing system environments, configurations, or devices. Examples of well-known computing systems, environments, and/or configurations that may be suitable for use with aspects of the disclosure include, but are not limited to, server computers, desktop computers, laptop computers, tablets, mobile devices, communication devices in wearable or accessory form factors, microprocessor-based systems, multiprocessor systems, programmable consumer electronics, kiosks, tabletop devices, industrial control devices, minicomputers, mainframe computers, network computers, distributed computing environments that include any of the above systems or devices, and the like.

Examples of the present disclosure may be described in the general context of computer-executable instructions, such as program modules, executed by one or more computers or other devices in software, firmware, hardware, or a combination thereof. The computer-executable instructions may be organized into one or more computer-executable modules or components. Generally, program modules include, but are not limited to, routines, objects, components, and data structures that perform particular tasks or implement particular abstract data types. Aspects of the disclosure may be implemented with any number and organization of such modules or components. For example, aspects of the present disclosure are not limited to the specific computer-executable instructions or the specific components or modules illustrated in the figures and described herein. Other examples of the present disclosure may include different computer-executable instructions or components having more or less functionality than illustrated and described herein.

In some examples, the operations illustrated in the drawings may be implemented as software instructions encoded on a computer readable medium, in hardware programmed or designed to perform the operations, or both. For example, aspects of the present disclosure may be implemented as a system on a chip or other circuitry including a plurality of interconnected, electrically conductive elements.

It is possible for one or more elements of an implementation of an apparatus as described herein to be used to perform tasks or execute other sets of instructions that are not directly related to an operation of the apparatus, such as a task relating to another operation of a device or system in which the apparatus is embedded. It is also possible for one or more elements of an implementation of such an apparatus to have structure in common (e.g., a processor used to execute portions of code corresponding to different elements at different times, a set of instructions executed to perform tasks corresponding to different elements at different times, or an arrangement of electronic and/or optical devices performing operations for different elements at different times).

The order of execution or performance of the operations in examples of the present disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the present disclosure.

The examples illustrated and described herein as well as examples not specifically described herein but within the scope of aspects of the present disclosure constitute example means for presenting a targeted message. For example, the elements illustrated in FIGS. 1-3 and 6, when programmed, encoded, or configured to perform the operations illustrated in FIG. 4, constitute at least an example means for establishing communications with a user computer to obtain information on a software development solution (e.g., server 210, context analyzer 310), an example means for analyzing information on a software development solution to identify an opportunity to present a message to a user computer (e.g., server 210, context analyzer 310), an example means for selecting one or more targeted messages (e.g., server 210, message generator 320), and an example means for providing one or more targeted messages to a user computer for presentation at the user computer (e.g., server 210, message generator 320). Additionally or alternatively, the elements illustrated in FIGS. 1-3 and 6, when programmed, encoded, or configured to perform the operations illustrated in FIG. 5, constitute at least an example means for establishing communications with a user interface to obtain one or more representations of input received and output provided at the user interface (e.g., supervisory computer 120, user computer 220, application 222, API 234, server 210, context analyzer 310), an example means for analyzing one or more representations to identify one or more code elements (e.g., supervisory computer 120, user computer 220, application 222, API 234, server 210, context analyzer 310), an example means for analyzing one or more code elements to identify one or more code quality issues associated with the one or more code elements (e.g., supervisory computer 120, user computer 220, application 222, API 234, server 210, context analyzer 310), an example means for selecting one or more targeted messages based at least in part on one or more code quality issues (e.g., supervisory computer 120, user computer 220, application 222, API 234, server 210, message generator 320), and/or an example means for providing one or more targeted messages to a user interface (e.g., supervisory computer 120, user computer 220, application 222, API 234, server 210, message generator 320).

When introducing elements of aspects of the disclosure or the examples thereof, the articles "a," "an," "the," and "said" are intended to mean that there are one or more of the elements. Furthermore, references to an "embodiment" or "example" of the present disclosure are not intended to be interpreted as excluding the existence of additional embodiments or examples that also incorporate the recited features. The terms "comprising," "including," and "having" are intended to be inclusive and mean that there may be additional elements other than the listed elements. The phrase "one or more of the following: A, B, and C" means "at least one of A and/or at least one of B and/or at least one of C."

The term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

In the present description, reference numbers have sometimes been used in connection with various terms. Where a term is used in connection with a reference number, this may be meant to refer to a specific element that is shown in one or more of the figures. Where a term is used without a reference number, this may be meant to refer generally to the term without limitation to any particular figure.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the aspects of the present disclosure have been described in terms of various examples with their associated operations, a person skilled in the art would appreciate that a combination of operations from any number of different examples is also within the scope of the aspects of the present disclosure.

The present invention ma also be described by the following clauses, optionally in combination with one or more of the above-mentioned features of the present invention:
- 10. A method for presenting a targeted message, the method comprising: establishing communications with a user interface to obtain one or more representations of input received and output provided at the user interface; analyzing the one or more representations to identify one or more code elements; analyzing the one or more code elements to identify one or more code quality issues associated with the one or more code elements; in response to identifying the one or more code quality issues, selecting one or more targeted messages based at least in part on the one or more code quality issues; and providing the one or more targeted messages to the user interface.
- 11. The method of clause 10, wherein analyzing the one or more code elements comprises determining whether the one or more code elements are compliant with a style guide, wherein the one or more code quality issues are identified on condition that the one or more code elements are not compliant with the style guide.
- 12. The method of any one of clauses 10 to 11, wherein analyzing the one or more representations comprises generating usage information, wherein the one or more code quality issues are identified based at least in part on the usage information.
- 13. The method of any one of clauses 10 to 12, wherein analyzing the one or more representations comprises generating usage information, wherein the one or more targeted messages are selected based at least in part on the usage information.
- 14. The method of any one of clauses 10 to 13, further comprising obtaining profile information associated with a user associated with the user interface, wherein the one or more code quality issues are identified based at least in part on the profile information.
- 15. The method of any one of clauses 10 to 14, further comprising obtaining profile information associated with a user associated with the user interface, wherein the one or more targeted messages are selected based at least in part on the profile information.
- 16. A system comprising: a processor; and a computer-readable memory comprising one or more instructions for causing the processor to: establish communications with a user interface to obtain, from the user interface, one or more representations of input received and output provided at the user interface; analyze the one or more representations to identify one or more code elements; analyze the one or more code elements to identify one or more code quality issues associated with the one or more code elements; in response to identifying the one or more code quality issues, select one or more targeted messages based at least in part on the one or more code quality issues; and provide the one or more targeted messages to the user interface.
- 17. The system of clause 16, wherein the one or more instructions further cause the processor to determine whether the one or more code elements are compliant with a style guide, wherein the one or more code quality issues are identified on condition that the one or more code elements are not compliant with the style guide.
- 18. The system of any one of clauses 16 to 17, wherein the one or more instructions further cause the processor to generate usage information, wherein the one or more code quality issues are identified based at least in part on the usage information.
- 19. The system of any one of clauses 16 to 18, wherein the one or more instructions further cause the processor to generate usage information, wherein the one or more targeted messages are selected based at least in part on the usage information.
- 20. The system of any one of clauses 16 to 19, wherein the one or more instructions further cause the processor to obtain profile information associated with a user associated with the user interface, wherein the one or more code quality issues are identified based at least in part on the profile information.
- 21. The system of any one of clauses 16 to 20, wherein the one or more instructions further cause the processor to obtain profile information associated with a user associated with the user interface, wherein the one or more targeted messages are selected based at least in part on the profile information.

Accordingly, the present invention may also be described as methods and systems for adding targeted messages and/or as follows, optionally in combination with one or more of the above-mentioned features of the present invention: A method for presenting a targeted message includes establishing communications with a user computer to obtain, from the user computer, information on an application running on the user computer, analyzing the information on the application to identify an opportunity to present a message to the user computer, selecting one or more targeted messages in response to identifying the opportunity to present the message, and providing the one or more targeted messages to the user computer for presentation at the user computer.

## Claims

1. Method (400) for presenting a targeted message, the method comprising:
establishing (410) communications with a user computer (220) to obtain, from the user computer, information (332) on an application (222) running on the user computer;
analyzing (420) the information on the application to identify an opportunity to present a message to the user computer;
in response to identifying the opportunity to present the message, selecting (430) one or more targeted messages (236); and
providing (440) the one or more targeted messages to the user computer for presentation at the user computer.

2. Method of claim 1, wherein analyzing the information on the application comprises
detecting textual content; and
analyzing the textual content to identify one or more quality issues associated with the textual content, wherein the opportunity to present the message is identified based at least in part on the one or more quality issues.

3. Method of any one of claims 1 to 2, wherein analyzing the information on the application comprises:
detecting textual content; and
analyzing the textual content to identify one or more quality issues associated with the textual content, wherein the one or more targeted messages are selected based at least in part on the one or more quality issues.

4. Method of any one of claims 1 to 3, wherein analyzing the information on the application comprises:
detecting one or more code elements; and
analyzing the one or more code elements to identify one or more code quality issues associated with the one or more code elements, wherein the opportunity to present the message is identified based at least in part on the one or more code quality issues.

5. Method of any one of claims 1 to 4, wherein analyzing the information on the application comprises:
detecting one or more code elements; and
analyzing the one or more code elements to identify one or more code quality issues associated with the one or more code elements, wherein the one or more targeted messages are selected based at least in part on the one or more code quality issues.

6. Method of any one of claims 4 to 5, further comprising determining whether the one or more code elements are compliant with a style guide, wherein the one or more code quality issues are identified on condition that the one or more code elements are not compliant with the style guide.

7. Method of any one of claims 1 to 6, further comprising recording usage information (336) associated with one or more of the application or the user computer, wherein analyzing the information on the application comprises analyzing the usage information with the information on the application to identify the opportunity to present the message based at least in part on the usage information.

8. Method of any one of claims 1 to 6, further comprising recording usage information (336) associated with one or more of the application or the user computer, wherein selecting the one or more targeted messages comprises analyzing the usage information to select the one or more targeted messages based at least in part on the usage information.

9. Method of any one of claims 1 to 8, further comprising obtaining profile information (338) associated with a user (224) of the user computer, wherein analyzing the information on the application comprises analyzing the profile information with the information on the application to identify the opportunity to present the message based at least in part on the profile information.

10. Method of any one of claims 1 to 8, further comprising obtaining profile information (338) associated with a user (224) of the user computer, wherein selecting the one or more targeted messages comprises analyzing the profile information to select the one or more targeted messages based at least in part on the profile information.

11. System (600) comprising:
a processor (610); and
a computer-readable memory (620) comprising one or more instructions for causing the processor to:
establish (410) communications with a user computer (220) to obtain, from the user computer, information (332) on an application (222) running on the user computer;
analyze (420) the information on the application to identify an opportunity to present a message to the user computer;
in response to identifying the opportunity to present the message, select (430) one or more targeted messages (236); and
provide (440) the one or more targeted messages to the user computer for presentation at the user computer.

12. System of claim 11, wherein the processor is further configured to detect textual content, and analyze the textual content to identify one or more quality issues associated with the textual content, wherein the opportunity to present the message is identified based at least in part on the one or more quality issues, and wherein the one or more targeted messages are selected based at least in part on the one or more quality issues.

13. System of any one of claims 11 to 12, wherein the processor is further configured to detect one or more code elements, and analyze the one or more code elements to identify one or more code quality issues associated with the one or more code elements, wherein the opportunity to present the message is identified based at least in part on the one or more code quality issues, and wherein the one or more targeted messages are selected based at least in part on the one or more code quality issues.

14. System of any one of claims 11 to 13, wherein the processor is further configured to record usage information (336) associated with one or more of the application or the user computer, and analyze the usage information with the information on the application to identify the opportunity to present the message and select the one or more targeted messages based at least in part on the usage information.

15. System of any one of claims 11 to 14, wherein the processor is further configured to obtain profile information (338) associated with a user (224) of the user computer, and analyze the profile information with the information on the application to identify the opportunity to present the message based at least in part on the profile information and select the one or more targeted messages based at least in part on the profile information.
